(19) Europäisches Patentamt

European Patent Office

Office européen des brevets

(11) **EP 0 953 504 B1**

(12) **FASCICULE DE BREVET EUROPEEN**

(45) Date de publication et mention
de la délivrance du brevet:
**17.12.2003 Bulletin 2003/51**

(51) Int Cl.⁷: **B64C 13/16**, G05D 1/08

(21) Numéro de dépôt: **99400928.0**

(22) Date de dépôt: **16.04.1999**

(54) **Aéronef à efforts de voilure diminués**

Flugzeug mit verminderter Flügelbelastung

Aircraft with reduced wing loads

(84) Etats contractants désignés:
**DE GB**

(30) Priorité: **29.04.1998 FR 9805400**

(43) Date de publication de la demande:
**03.11.1999 Bulletin 1999/44**

(73) Titulaire: **AIRBUS FRANCE**
**31060 Toulouse (FR)**

(72) Inventeurs:
• **Bilange, Thierry**
**31170 Tornefeuille (FR)**

• **Divouz-Plantaz, Marie-Laure**
**31830 Plaisance du Touch (FR)**

(74) Mandataire: **Bonnetat, Christian**
**CABINET BONNETAT**
**29, rue de St. Pétersbourg**
**75008 Paris (FR)**

(56) Documents cités:
**EP-A- 0 193 442**      **FR-A- 2 719 548**
**US-A- 4 697 768**      **US-A- 5 186 416**

**Description**

La présente invention concerne un aéronef dans lequel les efforts appliqués en vol à sa voilure, notamment à l'emplanture des ailes, sont diminués. Elle s'applique à des aéronefs possédant un empennage avant, généralement appelé canard, en partie ou entièrement pilotable par un calculateur de commandes de vol, comme cela est par exemple décrit dans les documents EP-A-0 193 442, FR-A-2 449 592 ou FR-A-2 719 548, qui est considéré comme l'état de la technique le plus proche.

Par le brevet US-A-5 186 416, on connaît déjà un système pour diminuer les efforts appliqués à la voilure d'un aéronef et ceux appliqués à l'emplanture de cette voilure. Dans ce système connu, on utilise des surfaces aérodynamiques liées à ladite voilure pour ramener le point d'application de la portance globale de la voilure plus près du fuselage et pour ainsi diminuer le moment de flexion que doit supporter la structure de l'aéronef à l'emplanture de la voilure, lorsque l'aéronef est soumis à une accélération verticale supérieure à un seuil prédéterminé. Ce système connu est applicable aussi bien lorsque l'aéronef subit une rafale de vent que lorsqu'il effectue une manoeuvre, telle qu'une ressource, en réponse à une action volontaire du pilote.

Le fonctionnement de ce système connu reposant sur le braquage de surfaces aérodynamiques liées à la voilure, il en résulte une limitation due au nombre desdites surfaces aérodynamiques disponibles à cet effet. Par ailleurs, le débattement maximal de chacune desdites surfaces aérodynamiques de voilure utilisée est généralement limité pour des raisons de vibrations (buffeting) ou de perte d'efficacité au-delà d'un certain seuil.

La présente invention a pour objet de remédier à ces inconvénients en utilisant au mieux l'ensemble des surfaces aérodynamiques portantes d'un aéronef pourvu d'un empennage avant pour obtenir la manoeuvrabilité (facteur de charge) souhaitée.

A cette fin, selon l'invention, l'aéronef comportant :

- une voilure principale,
- des surfaces aérodynamiques de profondeur commandées par un organe d'actionnement volontaire (manche, minimanche), qui se trouve à la disposition du pilote et qui engendre un ordre de braquage dm pour lesdites surfaces aérodynamiques de profondeur, et
- un empennage avant (canard) dont les plans sont partiellement ou totalement réglables, de façon couplée, en orientation angulaire sous l'action d'actionneurs commandés par des moyens de calcul,

est remarquable en ce que lesdits moyens de calcul :

- reçoivent en continu :

  - ledit ordre de braquage dm engendré par ledit organe d'actionnement volontaire,
  - la mesure de l'incidence $\alpha$c dudit empennage avant,
  - la mesure du nombre de Mach M dudit aéronef,
  - la mesure de l'altitude de vol Zp dudit aéronef, et
  - la mesure de l'accélération verticale nz (facteur de charge) dudit aéronef ;

- comportent en mémoire :

  - un seuil à cabrer dms pour ledit ordre de braquage dm engendré par ledit organe d'actionnement volontaire,
  - les caractéristiques aérodynamiques dudit empennage avant, et
  - un premier seuil nz1 d'accélération verticale pour la mesure de l'accélération verticale nz dudit aéronef ;

- calculent, pour ledit empennage avant, un ordre de braquage dic correspondant à une augmentation de la portance de celui-ci lorsque, à la fois, ledit ordre de braquage dm engendré par ledit organe d'actionnement dépasse ledit seuil à cabrer dms et que la mesure de l'accélération verticale nz dudit aéronef dépasse ledit premier seuil nz1 d'accélération verticale ; et
- appliquent audit empennage avant, par l'intermédiaire desdits actionneurs, ledit ordre de braquage dic ainsi calculé.

Ainsi, lorsque le pilote de l'aéronef manoeuvre l'aéronef en agissant sur ledit organe d'actionnement volontaire pour induire un moment de tangage à cabrer de l'aéronef (c'est-à-dire que le pilote tire sur le manche), ce qui augmente l'incidence, la portance totale et l'accélération verticale de l'aéronef, la portance de l'empennage avant de l'aéronef est elle-même augmentée et assure une partie de l'augmentation de la portance totale. L'augmentation de la portance de l'empennage avant contribue donc à limiter l'augmentation de la portance de la voilure et, par voie de conséquence, les efforts appliqués à celle-ci, et notamment à son emplanture sur l'aéronef.

On remarquera que la diminution des efforts appliqués à ladite voilure se produit conformément à la présente invention, au cours d'une manoeuvre volontaire de la part du pilote (l'ordre de braquage en profondeur est supérieur audit premier seuil) et au-delà d'une certaine accélération verticale de l'aéronef (supérieure audit seuil nzl). Ainsi, la protection de la voilure conformément à la présente invention n'est effectivement mise en oeuvre que lorsque les efforts appliqués à la voilure, et notamment à son emplanture, sont susceptibles d'atteindre une valeur critique, mettant en danger l'intégrité de la structure de la voilure ou du fuselage, quand l'aéronef effectue une manoeuvre en vol. Cette protection conforme à la présente invention n'intervient donc que pour réduire les efforts maximaux et n'est pas active en vol normal, afin d'éviter une utilisation excessive des actionneurs associés à l'empennage avant et une augmentation de la traînée de l'aéronef.

Ainsi, dans un aéronef pourvu d'un empennage avant, la présente invention permet de tirer au mieux profit de l'ensemble des surfaces portantes pour obtenir le facteur de charge, et donc la manoeuvrabilité, souhaités.

Contrairement à la technique antérieure rappelée ci-dessus, qui déplace le point d'application des faces aérodynamiques de la voilure, la présente invention diminue la portance globale de la voilure en reportant la différence de portance sur l'empennage avant.

On remarquera, toutefois, que la présente invention est compatible avec cette technique antérieure et qu'il est éventuellement possible de les mettre en oeuvre simultanément sur un même aéronef possédant un empennage avant, l'une (la technique antérieure) utilisant des surfaces aérodynamiques liées à la voilure et l'autre (la présente invention) agissant sur ledit empennage avant.

Ledit ordre de braquage appliqué à l'empennage avant par lesdits moyens de calcul engendre un moment de tangage qui peut être immédiatement contré par application d'un ordre approprié sur lesdites surfaces aérodynamiques de profondeur ou sur toutes autres surfaces susceptibles de développer un moment de tangage en exploitation normale de l'aéronef. Si l'aéronef possède une surface arrière portante stabilisatrice (empennage horizontal), cette surface arrière peut être suffisante à elle seule pour stabiliser l'avion en contrant le moment de tangage engendré par ledit empennage avant par une augmentation de sa propre portance. Une telle action stabilisante contribue donc aussi à la diminution de la portance de la voilure et donc des efforts appliqués à la voilure et du moment appliqué à l'emplanture de celle-ci.

' Dans un mode de réalisation avantageux de la présente invention, lesdits moyens de calcul comportent en mémoire un second seuil $nz2$ d'accélération verticale pour la mesure de l'accélération verticale $nz$, ledit second seuil $nz2$ étant supérieur audit premier seuil $nz1$, et ledit ordre de braquage $dic$ pour ledit empennage avant correspond, d'une part, à une variation au moins approximativement linéaire de la portance dudit empennage avant en fonction de ladite accélération verticale $nz$, lorsque celle-ci est comprise entre lesdits premier et second seuils $nz1$ et $nz2$ d'accélération verticale et, d'autre part, à un palier maximal de portance $Czcs$ indépendant de ladite accélération verticale $nz$, lorsque celle-ci est supérieure audit second seuil $nz2$.

Ainsi, lesdits moyens de calcul peuvent alors :

- déterminer, à partir desdites caractéristiques aérodynamiques, le coefficient de portance $Czac$ et l'incidence de portance nulle $\alpha oc$ dudit empennage avant pour le nombre de Mach $M$ et l'altitude $Zp$ mesurés ;
- calculer, à partir dudit coefficient de portance et de l'incidence de portance nulle ainsi déterminés et à partir de ladite mesure de l'incidence $\alpha c$ dudit empennage avant, le coefficient de portance $Czc$ de celui-ci ;
- déterminer ledit palier maximal de portance $Czcs$ pour lesdits nombre de Mach $M$ et altitude $Zp$ mesurés ; et
- calculer ledit ordre de braquage $dic$ par la formule :

$$dic = (Czcs - Czc) / Cz\alpha c \times (nz - nz1) / (nz2 - nzl).$$

De préférence, lesdits premier et second seuils d'accélération verticale sont respectivement de l'ordre de 2 g et de 2,5 g (g étant l'accélération de la pesanteur).

Il est avantageux que lesdits moyens de calcul comportent en mémoire une valeur d'hystérésis d'accélération verticale $\Delta nz$ pour retarder la décroissance de portance dudit empennage avant en fonction de la décroissance de ladite accélération verticale $nz$ entre lesdits premier et second seuils $nz2$ et $nz1$. Cette valeur d'hystérésis $\Delta nz$ peut être de l'ordre de 0,15 g.

Dans le cas où ledit aéronef comporte un dispositif principal de commande dudit empennage avant par l'intermédiaire desdits actionneurs, auxquels ledit dispositif principal adresse un ordre de braquage $dicn$, il est avantageux de prévoir un premier dispositif intermédiaire, du type additionneur ou commutateur, dont la sortie commande lesdits actionneurs et dont les deux entrées reçoivent respectivement l'ordre de braquage $dic$ calculé par lesdits moyens de calcul et l'ordre de braquage $dicn$ engendré par ledit dispositif de commande principal.

Ainsi, la portance dudit empennage avant est commandée, lorsque les conditions d'allègement des charges de voilure sont réunies, soit par la somme des ordres dic et dicn, soit par ledit ordre dic.

L'aéronef peut de plus comporter un deuxième dispositif intermédiaire, également du type additionneur ou commutateur, dont la sortie commande lesdites surfaces aérodynamiques de profondeur et dont les deux entrées reçoivent respectivement un ordre de braquage dq engendré par lesdits moyens de calcul pour contrecarrer le moment de tangage engendré par ledit empennage avant et l'ordre de braquage provenant dudit organe d'actionnement volontaire.

La présente invention s'applique aussi bien que l'empennage avant soit totalement ou partiellement réglable. A cet effet, les plans dudit empennage avant peuvent tourner autour d'un axe transversal à l'axe longitudinal de l'aéronef et/ou être pourvus de gouvernes de bord de fuite.

Les figures du dessin annexé feront bien comprendre comment l'invention peut être réalisée. Sur ces figures, des références identiques désignent des éléments semblables.

La figure 1 est une vue en perspective d'un avion de transport à empennage avant canard conforme à l'invention.

La figure 2 est le schéma synoptique d'un exemple de réalisation du système de protection de la voilure dudit avion de transport contre des efforts excessifs.

La figure 3 est un diagramme illustrant, en fonction de l'accélération verticale, la variation de portance de l'empennage avant canard dudit avion de transport.

La figure 4 illustre une variante de réalisation de l'empennage avant canard.

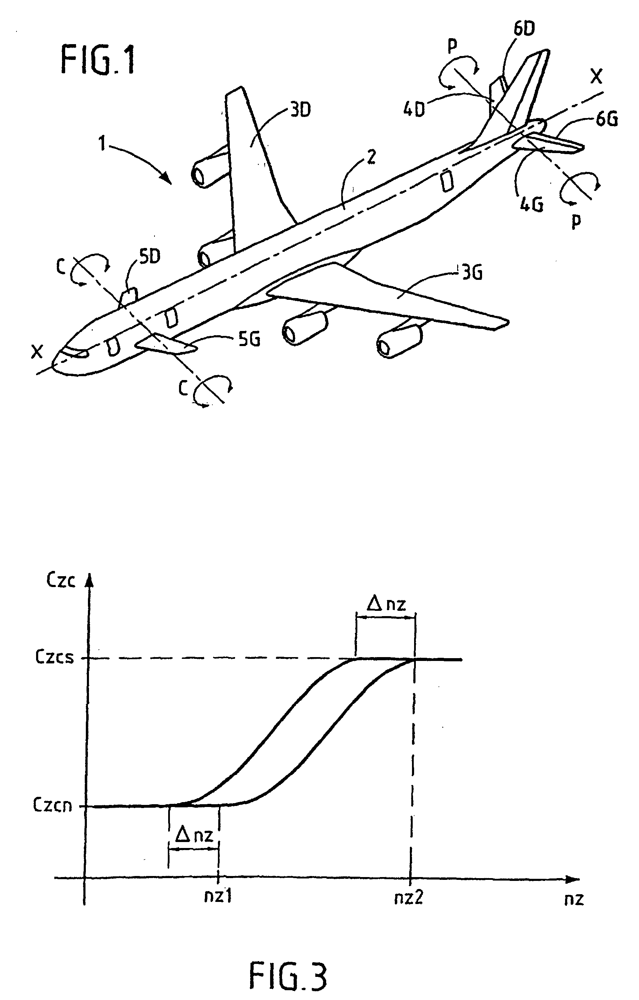

L'avion de transport 1, conforme à la présente invention et représenté sur la figure 1, comporte un fuselage 2, d'axe longitudinal X-X, auquel sont raccordés, entre autres, deux ailes 3G et 3D formant la voilure principale, un empennage arrière horizontal formé de deux plans stabilisateurs 4G et 4D et un empennage canard avant pourvu de deux plans canard 5G et 5D. Les deux ailes 3G et 3D, les deux plans stabilisateurs arrière 4G et 4D et les deux plans canard avant 5G et 5D sont, respectivement, symétriques l'un de l'autre par rapport à l'axe longitudinal X-X.

Les ailes 3G et 3D portent des volets, des ailerons, des becs, etc ... (non représentés), ainsi que des moteurs de propulsion (représentés, mais non référencés).

Chacun des plans stabilisateurs arrière 4G et 4D est pourvu d'une gouverne de profondeur 6G ou 6D, respectivement, et peut éventuellement être réglé en orientation angulaire par rotation autour d'un axe transversal P-P, perpendiculaire à l'axe longitudinal X-X, lesdits plans stabilisateurs arrière 4G et 4D étant couplés en rotation.

Chacun des plans canard avant 5G et 5D peut être réglé en orientation angulaire par rotation autour d'un axe transversal C-C, perpendiculaire à l'axe longitudinal X-X.

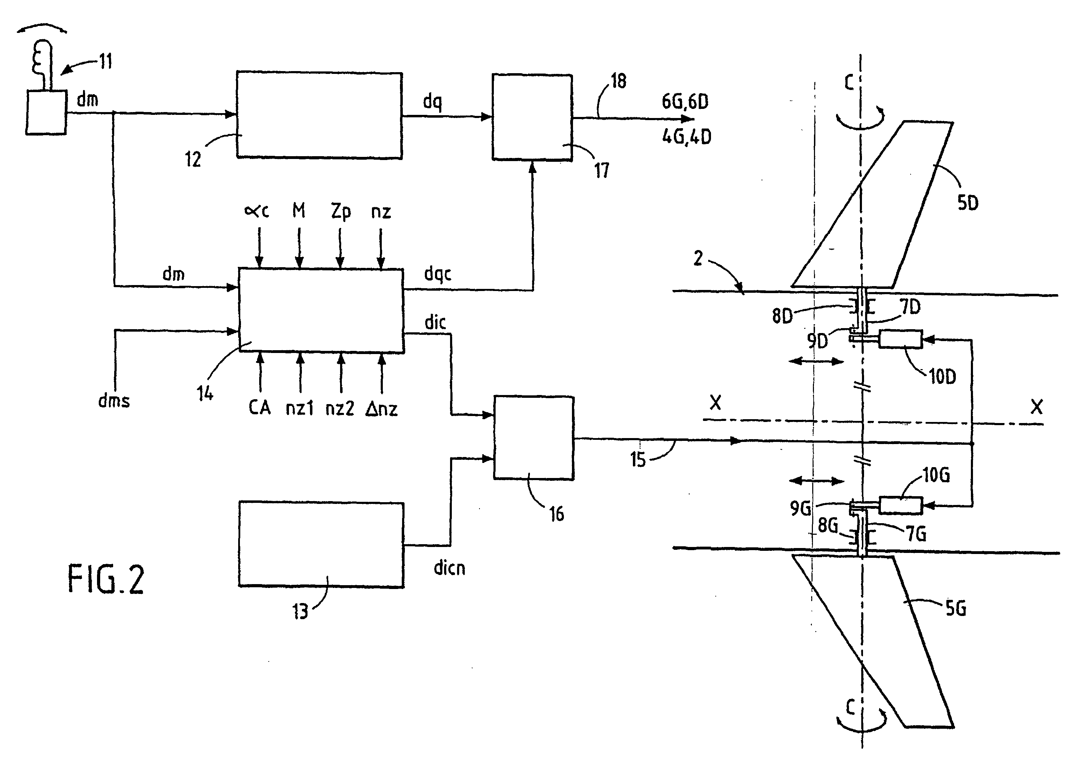

A cet effet, comme on peut le voir sur la figure 2, chaque plan canard 5G, 5D est solidaire d'un arbre 7G, 7D tourillonné librement dans des paliers 8G, 8D solidaires de l'avion 1.

Dans l'exemple de la figure 2, chaque arbre 7G, 7D porte un maneton 9G, 9D, lesdits manetons étant respectivement articulés à des organes d'actionnement 10G, 10D, par exemple des vérins.

Par ailleurs, l'avion de transport 1 comporte de façon usuelle un organe d'actionnement volontaire 11, du type manche ou minimanche, à la disposition du pilote et susceptible d'engendrer un ordre de profondeur dm. Cet ordre de profondeur est transmis à un dispositif de commande en profondeur 12, qui adresse un signal de profondeur dq aux gouvernes de profondeur 6G et 6D et/ou à d'autres surfaces aérodynamiques de l'avion 1 (non représentées) susceptibles de commander celui-ci en profondeur.

L'avion 1 comporte également un dispositif 13, par exemple celui décrit dans FR-A-2 719 548, qui engendre un ordre de braquage nominal dicn pour les plans canard avant 5G et 5D, appliqué auxdits vérins 10G et 10D.

Conformément à la présente invention, il est de plus prévu un calculateur 14, calculant un ordre de braquage de sécurité dic pour lesdits plans canard avant 5G et 5D, cet ordre de braquage de sécurité étant destiné à s'ajouter à l'ordre de braquage nominal dicn. A cet effet, dans la liaison 15 entre les vérins 10G et 10D, d'une part, et le dispositif 13 et le calculateur 14, d'autre part, est interposé un additionneur 16. Par ailleurs, éventuellement, le calculateur 14 calcule un ordre de braquage dqc pour les gouvernes de profondeur 6G et 6D, destiné à contrer le moment de tangage engendré par les plans canard avant 5G et 5D. Cet ordre de braquage dqc est adressé à un additionneur 17, interposé dans la liaison 18 entre le dispositif de commande en profondeur 12 et lesdites gouvernes de profondeur 6G et 6D. Le calculateur 14 peut également engendrer un ordre destiné à faire varier l'orientation angulaire des plans stabilisateurs 4G et 4D, lorsque ceux-ci sont réglables autour de l'axe P-P.

Le calculateur 14 reçoit en continu :

- l'ordre de braquage dm engendré par l'organe d'actionnement volontaire en profondeur 11 ;
- la mesure de l'incidence $\alpha c$ de l'empennage avant 5G, 5D, délivrée par exemple par une sonde d'incidence (non représentée) ;
- la mesure du nombre de Mach M, délivrée par un machmètre (non représenté) ;
- la mesure de l'altitude Zp, délivrée de façon connue par un altimètre ou des sondes altimétriques (non représentées) ;

- la mesure de l'accélération verticale nz, délivrée de façon connue par un accéléromètre ou par un gyromètre (non représentés).

Par ailleurs, le calculateur 14 comporte en mémoire :

- un seuil à cabrer dms pour l'ordre de braquage dm, ledit seuil dms correspondant par exemple à la moitié de la course de l'organe d'actionnement volontaire 11 dans le sens du cabrage ;
- les caractéristiques aérodynamiques CA de l'empennage avant 5G, 5D comprenant au moins le coefficient de portance $Cz\alpha c$ et l'incidence de portance nulle $\alpha oc$. Ces caractéristiques aérodynamiques se présentent par exemple sous la forme de tables donnant leur valeur en fonction du nombre de Mach M et de l'altitude Zp ;
- un seuil nz1 pour l'accélération verticale nz de l'avion 1, ce seuil nz1 étant par exemple égal à 2 g (g étant l'accélération de la pesanteur) ;
- un autre seuil nz2 pour l'accélération verticale nz de l'avion 1, ce seuil nz2 étant supérieur au seuil nz1 et par exemple égal à 2,5 g ; et
- une valeur d'hystérésis d'accélération verticale $\Delta$ nz, par exemple égale à 0,15 g.

Le calculateur 14 fonctionne de la façon suivante :

- il détermine, à partir des tables contenant les caractéristiques aérodynamiques CA de l'empennage avant 5G, 5D, les valeurs du coefficient de portance Czac et de l'incidence de portance nulle $\alpha oc$ de celui-ci, correspondant aux valeurs mesurées du nombre de Mach M et de l'altitude Zp ;
- il calcule, à partir de la mesure de l'incidence $\alpha c$ de l'empennage avant 5G, 5D et des valeurs du coefficient de portance Czac et de l'incidence de portance nulle $\alpha oc$ déterminées ci-dessus, le coefficient de portance Czc dudit empennage avant ;
- il détermine, à partir des tables contenant les caractéristiques aérodynamiques CA de l'empennage avant 5G, 5D, la portance maximale possible pour ce dernier, en fonction du cas de vol, du nombre de Mach M et de l'altitude Zp. Il retranche de cette portance maximale une marge de précaution, définie de façon à s'affranchir des perturbations atmosphériques rencontrées au cours de la manoeuvre et susceptibles d'amener l'empennage avant dans des conditions de décrochage ou de buffeting, de manière à obtenir une portance maximale autorisée Czcs pour ledit empennage avant. Par exemple, la portance maximale autorisée Czcs est choisie égale à 90% de ladite portance maximale possible ;
- il calcule, dans le cas où l'accélération verticale mesurée nz devient supérieure au seuil nz1, un ordre de braquage dic pour ledit empennage avant, tel que

$$dic = (Czcs - Czc) / Czac \times (nz - nz1) / (nz2 - nz1) \; ;$$

- et, si l'ordre de braquage dm issu de l'organe d'actionnement volontaire est supérieur au seuil à cabrer dms, il applique cet ordre de braquage dic à l'empennage avant 5G, 5D.

Ainsi, lorsque l'accélération verticale nz de l'avion 1 dépasse le seuil nz1 et que cette accélération est souhaitée par le pilote (puisque dm est supérieur à dms), le système de la figure 2 braque l'empennage avant 5G, 5D pour lui faire augmenter sa portance, jusqu'à la valeur maximale autorisée Czcs, atteinte pour la valeur nz2 de l'accélération verticale nz.

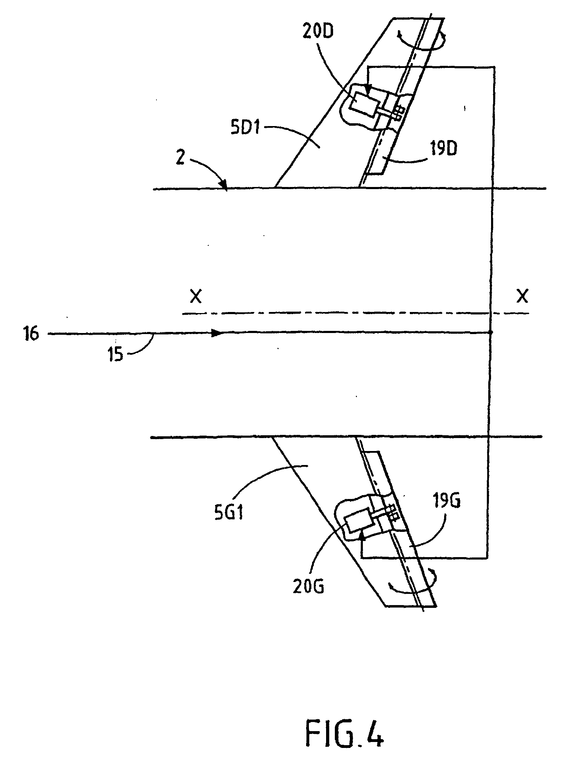

Ceci est illustré par le diagramme de la figure 3, qui montre que :

- lorsque l'accélération verticale nz est inférieure au seuil nz1, la portance de l'empennage avant 5G, 5D se trouve à un niveau Czcn déterminé par le dispositif 13 ;
- lorsque l'accélération verticale nz dépasse le seuil nz1, la portance de l'empennage avant 5G, 5D croît jusqu'à atteindre la valeur Czcs au seuil nz2 ;
- si l'accélération verticale nz devient supérieure à nz2, la portance de l'empennage avant 5G, 5D reste stabilisée au niveau de la valeur maximale autorisée Czcs ;
- si l'accélération verticale nz décroît, la décroissance de la portance de l'empennage avant 5G, 5D est retardée de la valeur d'hystérésis $\Delta nz$, de sorte que cette décroissance ne commence que pour la valeur d'accélération verticale égale à nz2-$\Delta$nz et se termine à la valeur d'accélération verticale égale à nz1-$\Delta$nz.

L'hystérésis due au retard $\Delta nz$ introduit par le calculateur 14 a pour objet de ne pas nuire à la stabilité de l'avion 1 lors de manoeuvres avec un facteur de charge non stabilisé. En effet, la variation de portance du canard a un effet immédiat sur la stabilité de l'avion et on veut s'affranchir d'un éventuel retard de stabilisation en profondeur.

On remarquera que l'empennage arrière horizontal 4G, 4D exerce un effet passif de stabilisation en profondeur, lorsque la portance de l'empennage avant 5G, 5D varie. Si cet effet de stabilisation passif n'est pas suffisant, le calculateur peut, par l'intermédiaire de l'additionneur 17 et de la liaison 18, adresser aux gouvernes de profondeurs 6G, 6D et éventuellement à l'empennage arrière horizontal 4G, 4D s'il est du type réglable en orientation, en ordre de stabilisation en profondeur dqc.

Dans la description ci-dessus, on a supposé que les dispositifs 16 et 17 étaient des additionneurs, sommant, respectivement, les ordres dicn et dic et les ordres dqc et dq. On comprendra aisément que les dispositifs 16 et 17 pourraient être des commutateurs adressant respectivement à l'empennage avant 5G, 5D, soit l'ordre dic, soit l'ordre dicn et aux gouvernes de profondeur 6G, 6D (et éventuellement à l'empennage arrière 4G, 4D), soit l'ordre dq, soit l'ordre dqc.

Par ailleurs, sur les figures 1 et 2, on a montré que les plans 5G et 5D de l'empennage avant étaient orientables, en bloc, autour de l'axe transversal C-C. Sur la figure 4, on a représenté une variante de réalisation dans laquelle les plans 5G1 et 5D1 de l'empennage avant sont fixes, mais pourvus respectivement de gouvernes de bord de fuite 19G et 19D actionnées par des vérins 20G et 20D recevant les ordres dic et/ou dicn.

Bien entendu, quoique cette autre variante ne soit pas représentée, les plans orientables 5G et 5D de l'empennage avant de la figure 2 pourraient être pourvus également de gouvernes de bord de fuite semblables aux gouvernes 19G et 19D.

## Revendications

1. Aéronef comportant :

   - une voilure principale (3G, 3D),
   - des surfaces aérodynamiques de profondeur (6G, 6D) commandées par un organe d'actionnement volontaire (11), qui se trouve à la disposition du pilote et qui engendre un ordre de braquage dm pour lesdites surfaces aérodynamiques de profondeur (6G, 6D), et
   - un empennage avant (5G, 5D) dont les plans sont partiellement ou totalement réglables, de façon couplée, en orientation angulaire sous l'action d'actionneurs (10G, 10D) commandés par des moyens de calcul (14),

   **caractérisé en ce que** lesdits moyens de calcul (14) :

   - reçoivent en continu :

     . ledit ordre de braquage dm engendré par ledit organe d'actionnement volontaire (11),
     . la mesure de l'incidence $\alpha c$ dudit empennage avant (5G, 5D),
     . la mesure du nombre de Mach M dudit aéronef,
     . la mesure de l'altitude de vol Zp dudit aéronef, et
     . la mesure de l'accélération verticale nz dudit aéronef ;

   - comportent en mémoire :

     . un seuil à cabrer dms pour ledit ordre de braquage dm engendré par ledit organe d'actionnement volontaire (11),
     . les caractéristiques aérodynamiques (CA) dudit empennage avant (5G, 5D), et
     . un premier seuil nz1 pour la mesure de l'accélération verticale nz dudit aéronef ;

   - calculent, pour ledit empennage avant (5G, 5D), un ordre de braquage dic correspondant à une augmentation de la portance de celui-ci lorsque, à la fois, ledit ordre de braquage dm engendré par ledit organe d'actionnement dépasse ledit seuil à cabrer dms et que la mesure de l'accélération verticale nz dudit aéronef dépasse ledit premier seuil nz1 ; et
   - appliquent audit empennage avant (5G, 5D), par l'intermédiaire desdits actionneurs (10G, 10D), ledit ordre de braquage dic ainsi calculé.

2. Aéronef selon la revendication 1,
   **caractérisé en ce que** lesdits moyens de calcul (14) comportent en mémoire un second seuil nz2 pour la mesure de l'accélération verticale nz, ledit second seuil nz2 étant supérieur audit premier seuil nz1 d'accélération verticale, et **en ce que** ledit ordre de braquage dic pour ledit empennage avant (5G, 5D) correspond, d'une part, à une variation au moins approximativement linéaire de la portance dudit empennage avant (5G, 5D) en fonction de ladite accélération verticale nz, lorsque celle-ci est comprise entre lesdits premier et second seuils nz1 et nz2 d'accélération verticale et, d'autre part, à un palier maximal de portance Czcs indépendant de ladite accélération verticale nz, lorsque celle-ci est supérieure audit second seuil nz2 d'accélération verticale.

3. Aéronef selon la revendication 2,
   **caractérisé en ce que** lesdits moyens de calcul (14) :

   - déterminent, à partir desdites caractéristiques aérodynamiques (CA), le coefficient de portance Czac et l'incidence de portance nulle $\alpha$oc dudit empennage avant (5G, 5D) pour le nombre de Mach M et l'altitude Zp mesurés ;
   - calculent, à partir dudit coefficient de portance et de l'incidence de portance nulle ainsi déterminés et à partir de ladite mesure de l'incidence $\alpha$c dudit empennage avant (5G, 5D), le coefficient de portance Czc de celui-ci ;
   - déterminent ledit palier maximal de portance Czcs pour lesdits nombre de Mach M et altitude Zp mesurés ; et
   - calculent ledit ordre de braquage dic par la formule :

$$dic = (Czcs - Czc) / Czac \times (nz - nzl) / (nz2 - nz1).$$

4. Aéronef selon l'une des revendications 1 à 3,
   **caractérisé en ce que** ledit premier seuil nz1 d'accélération verticale est de l'ordre de 2 g.

5. Aéronef selon l'une des revendications 2 à 4,
   **caractérisé en ce que** ledit second seuil nz2 d'accélération verticale est de l'ordre de 2,5 g.

6. Aéronef selon l'une des revendications 2 à 5,
   **caractérisé en ce que** lesdits moyens de calcul (14) comportent en mémoire une valeur d'hystérésis d'accélération verticale $\Delta$nz pour retarder la décroissance de portance dudit empennage avant (5G, 5D) en fonction de la décroissance de ladite accélération verticale nz entre lesdits second et premier seuils nz2 et nz1 d'accélération verticale.

7. Aéronef selon la revendication 6,
   **caractérisé en ce que** ladite valeur d'hystérésis Anz est de l'ordre de 0,15 g.

8. Aéronef selon l'une quelconque des revendications 1 à 7, dans lequel est prévu un dispositif principal (13) de commande dudit empennage avant (5G, 5D) par l'intermédiaire desdits actionneurs (10G, 10D - 19G, 19D), auxquels il adresse un ordre de braquage dicn,
   **caractérisé en ce qu'**il comporte un premier dispositif intermédiaire (16), dont la sortie commande lesdits actionneurs et dont les deux entrées reçoivent respectivement l'ordre de braquage dic calculé par lesdits moyens de calcul (14) et l'ordre de braquage dicn engendré par ledit dispositif de commande principal (13).

9. Aéronef selon l'une quelconque des revendications 1 à 8,
   **caractérisé en ce qu'**il comporte un second dispositif intermédiaire (17), dont la sortie commande lesdites surfaces aérodynamiques de profondeur (6G, 6D) et dont les deux entrées reçoivent respectivement un ordre de braquage dqc engendré par lesdits moyens de calcul (14) pour contrecarrer le moment de tangage engendré par ledit empennage avant (5G, 5D) et l'ordre de braquage dq provenant dudit organe d'actionnement volontaire (11).

10. Aéronef selon l'une quelconque des revendications 1 à 9,
    **caractérisé en ce que** les plans (5G, 5D) dudit empennage avant tournent autour d'un axe (C-C) transversal à l'axe longitudinal (X-X) de l'aéronef.

11. Aéronef selon l'une quelconque des revendications 1 à 10,
    **caractérisé en ce que** les plans (5G, 5D) dudit empennage avant sont pourvus de gouvernes de bord de fuite.

**Claims**

1. Aircraft comprising:

   - a main wing structure (3G, 3D),
   - elevation control aerodynamic surfaces (6G, 6D) controlled by a deliberate-actuation member (11) which is available to the pilot and which generates a turn command dm for the said elevation-control aerodynamic surfaces (6G, 6D), and
   - a front stabilizer (5G, 5D), the planes of which are partially or completely adjustable, in coupled fashion, in terms of angular orientation under the action of actuators (10G, 10D) controlled by calculation means (14),

   **characterized in that** the said calculation means (14):

   - continuously receive:

     . the said turn command dm generated by the said deliberate-actuation member (11),
     . a measurement of the angle of incidence $\alpha c$ of the said front stabilizer (5G, 5D),
     . a measurement of the Mach number M of the said aircraft,
     . a measurement of the flight altitude Zp of the said aircraft, and
     . a measurement of the vertical acceleration nz of the said aircraft;

   - hold in memory:

     . a "nose-up" threshold dms for the said turn command dm generated by the said deliberate-actuation member (11),
     . the aerodynamic characteristics (CA) of the said front stabilizer (5G, 5D), and
     . a first threshold nz1 for the measurement of the vertical acceleration nz of the said aircraft;

   - calculate, for the said front stabilizer (5G, 5D), a turn command dic corresponding to an increase in the lift of this stabilizer when, simultaneously, the said turn command dm generated by the said actuating member exceeds the said nose-up threshold dms and the measurement of the vertical acceleration nz of the said aircraft exceeds the said first threshold nz1; and
   - apply the said turn command dic thus calculated to the said front stabilizer (5G, 5D) via the said actuators (10G, 10D).

2. Aircraft according to Claim 1,
   **characterized in that** the said calculation means (14) hold in memory a second threshold nz2 for the measurement of the vertical acceleration nz, the said second threshold nz2 being higher than the said first vertical-acceleration threshold nz1, and **in that** the said turn command dic for the said front stabilizer (5G, 5D) corresponds, on the one hand, to an at least approximately linear variation in the lift of the said front stabilizer (5G, 5D) as a function of the said vertical acceleration nz when this acceleration lies between the said first and second vertical-acceleration thresholds nz1 and nz2 and, on the other hand, to a maximum lift ceiling value Czcs independent of the said vertical acceleration nz when the latter is higher than the said second vertical-acceleration threshold nz2.

3. Aircraft according to Claim 2,
   **characterized in that** the said calculation means (14):

   - determine, on the basis of the said aerodynamic characteristics (CA), the coefficient of lift $Cz\alpha c$ and the zero-lift angle of incidence $\alpha oc$ of the said front stabilizer (5G, 5D) for the measured Mach number M and measured altitude Zp;
   - calculate, on the basis of the said coefficient of lift and of the zero-lift angle of incidence thus determined, and on the basis of the said measurement of the angle of incidence $\alpha c$ of the said front stabilizer (5G, 5D), the coefficient of lift Czc thereof;
   - determine the said maximum lift ceiling value Czcs for the said measured Mach number M and measured altitude Zp; and
   - calculate the said turn command dic using the formula:

$$dic = (Czcs - Czc) / Cz\alpha c \times (nz - nz1) / (nz2 - nz1).$$

4. Aircraft according to one of Claims 1 to 3,
**characterized in that** the said first vertical-acceleration threshold nz1 is of the order of 2 g.

5. Aircraft according to one of Claims 2 to 4,
**characterized in that** the said second vertical-acceleration threshold nz2 is of the order of 2.5 g.

6. Aircraft according to one of Claims 2 to 5,
**characterized in that** the said calculation means (14) hold in memory a vertical-acceleration hysteresis value $\Delta nz$ for delaying the decrease in lift of the said front stabilizer (5G, 5D) as a function of the decrease in the said vertical acceleration nz between the said second and first vertical-acceleration thresholds nz2 and nz1.

7. Aircraft according to Claim 6,
**characterized in that** the said hysteresis value $\Delta nz$ is of the order of 0.15 g.

8. Aircraft according to any one of Claims 1 to 7,
in which there is a main device (13) for controlling the said front stabilizer (5G, 5D) using the said actuators (10G, 10D - 19G, 19D) to which it sends a turn command dicn,
**characterized in that** it comprises a first intermediate device (16), the output of which controls the said actuators and the two inputs of which respectively receive the turn command dic calculated by the said calculation means (14) and the turn command dicn generated by the said main control device (13).

9. Aircraft according to any one of Claims 1 to 8,
**characterized in that** it comprises a second intermediate device (17), the output of which controls the said elevation-control aerodynamic surfaces (6G, 6D), and the two inputs of which respectively receive a turn command dqc generated by the said calculation means (14) to counter the pitching moment generated by the said front stabilizer (5G, 5D), and the turn command dq originating from the said deliberate-actuation member (11).

10. Aircraft according to any one of Claims 1 to 9,
**characterized in that** the planes (5G, 5D) of the said front stabilizer rotate about an axis (C-C) that is transverse to the longitudinal axis (X-X) of the aircraft.

11. Aircraft according to any one of Claims 1 to 10,
**characterized in that** the planes (5G, 5D) of the said front stabilizer are equipped with trailing-edge control surfaces.

**Patentansprüche**

1. Flugzeug, das Folgendes umfasst:

- ein Haupttragwerk (3G, 3D),
- aerodynamische Höhensteuerungsflächen (6G, 6D), die durch ein Organ zur willkürlichen Steuerung (11) gesteuert werden, das dem Piloten zur Verfügung steht und einen Ausschlagbefehl dm für die aerodynamischen Höhensteuerungsflächen (6G, 6D) erzeugt, und
- ein Kopfleitwerk (5G, 5D), dessen Flächen durch die Wirkung von Betätigungselementen (10G, 10D), die von Rechenmitteln (14) gesteuert werden, gekoppelt in der Winkelausrichtung teilweise oder vollständig verstellbar sind,

**dadurch gekennzeichnet, dass** die genannten Rechenmittel (14):

- dauernd Folgendes erhalten:

  • den vom Organ zur willkürlichen Steuerung (11 ) erzeugten Ausschlagbefehl dm,
  • den Messwert des Anstellwinkels $\alpha c$ des Kopfleitwerks (5G, 5D),
  • den Messwert der Machzahl M des Flugzeugs,

- den Messwert der Flughöhe Zp des Flugzeugs, und
- den Messwert der vertikalen Beschleunigung nz des Flugzeugs;

- Folgendes im Speicher haben:

  - einen Überziehungsschwellenwert dms für den Ausschlagbefehl dm, der vom Organ zur willkürlichen Steuerung (11 ) erzeugt wird,
  - die aerodynamischen Kennwerte (CA) des Kopfleitwerks, und
  - einen ersten Schwellenwert nz1 für den Messwert der vertikalen Beschleunigung nz des Flugzeugs;

- für das Kopfleitwerk (5G, 5D) einen Ausschlagbefehl dic berechnen, der einer Erhöhung von dessen Auftrieb entspricht, wenn gleichzeitig der vom Betätigungsorgan erzeugte Ausschlagbefehl dm den Überziehungsschwellenwert dms überschreitet und der Messwert der vertikalen Beschleunigung nz des Flugzeugs den genannten ersten Schwellenwert nz1 überschreitet; und
- mittels der genannten Betätigungselemente (10G, 10D) den so berechneten Ausschlagbefehl dic auf das Kopfleitwerk (5G, 5D) anwenden.

2. Flugzeug nach Anspruch 1,
**dadurch gekennzeichnet, dass** die Rechenmittel (14) einen zweiten Schwellenwert nz2 der vertikalen Beschleunigung für den Messwert der vertikalen Beschleunigung nz im Speicher haben, wobei dieser zweite Schwellenwert nz2 größer ist als der erste Schwellenwert nz1 der vertikalen Beschleunigung, und dadurch, dass der genannte Ausschlagbefehl dic für das Kopfleitwerk (5G, 5D) zum einen einer zumindest annähernd linearen Veränderung des Auftriebs des Kopfleitwerks (5G, 5D) in Abhängigkeit von der vertikalen Beschleunigung nz entspricht, wenn diese zwischen dem ersten und dem zweiten Schwellenwert nz1 und nz2 der vertikalen Beschleunigung liegt, und zum anderen einer maximalen Auftriebsstufe Czcs, die unabhängig von der vertikalen Beschleunigung nz ist, wenn diese über dem zweiten Schwellenwert nz2 der vertikalen Beschleunigung liegt.

3. Flugzeug nach Anspruch 2,
**dadurch gekennzeichnet, dass** die Rechenmittel (14):

   - ausgehend von den genannten aerodynamischen Kennwerten (CA) den Auftriebskoeffizienten Czac und den Nullauftriebsanstellwinkel $\alpha$oc des Kopfleitwerks (5G, 5D) für die gemessene Machzahl M und die gemessene Höhe Zp bestimmen;
   - ausgehend vom genannten Auftriebskoeffizienten und dem Nullauftriebsanstellwinkel, die so bestimmt wurden, und ausgehend vom Messwert des Anstellwinkels $\alpha$c des Kopfleitwerks (5G, 5D) dessen Auftriebskoeffizienten Czc berechnen;
   - die maximal mögliche Auftriebsstufe Czcs für die gemessene Machzahl M und die gemessene Höhe Zp bestimmen, und
   - den Ausschlagbefehl dic mit der Formel

$$\text{dic} = (\text{Czcs} - \text{Czc}) / \text{Cz}\alpha\text{c} \times (\text{nz} - \text{nz1}) / (\text{nz2} - \text{nz1}) \text{ berechnen.}$$

4. Flugzeug nach einem der Ansprüche 1 bis 3,
**dadurch gekennzeichnet, dass** der erste Schwellenwert nz1 der vertikalen Beschleunigung 2 g beträgt.

5. Flugzeug nach einem der Ansprüche 2 bis 4,
**dadurch gekennzeichnet, dass** der zweite Schwellenwert nz2 der vertikalen Beschleunigung 2,5 g beträgt.

6. Flugzeug nach einem der Ansprüche 2 bis 5,
**dadurch gekennzeichnet, dass** die Rechenmittel (14) einen Hysteresewert der vertikalen Beschleunigung $\Delta$nz im Speicher haben, um die Abnahme des Auftriebs des Kopfleitwerks (5G, 5D) in Abhängigkeit von der Abnahme der vertikalen Beschleunigung nz zwischen dem ersten und dem zweiten Schwellenwert nz2 und nz1 zu verzögern.

7. Flugzeug nach Anspruch 6,
**dadurch gekennzeichnet, dass** der genannte Hysteresewert $\Delta$nz 0,15 g beträgt.

8. Flugzeug nach einem beliebigen der Ansprüche 1 bis 7,

in dem eine Hauptvorrichtung (13) zur Steuerung des genannten Kopfleitwerks (5G, 5D) über die Betätigungselemente (10G, 10D - 19G, 19D) vorgesehen ist, an die sie einen Ausschlagbefehl dicn sendet, **dadurch gekennzeichnet, dass** es eine erste Zwischenvorrichtung (16) umfasst, deren Ausgang die Betätigungselemente steuert und dessen zwei Eingänge den von den Rechenmitteln (14) berechneten Ausschlagbefehl dic beziehungsweise den von der Hauptsteuervorrichtung (13) erzeugten Ausschlagbefehl dicn erhalten.

9.  Flugzeug nach einem beliebigen der Ansprüche 1 bis 8,
    **dadurch gekennzeichnet, dass** es eine zweite Zwischenvorrichtung (17) umfasst, deren Ausgang die aerodynamischen Höhensteuerungsflächen (6G, 6D) steuert und deren zwei Eingänge einen von den Rechenmitteln (14) erzeugten Ausschlagbefehl dqc, um dem durch das Kopfleitwerk (5G, 5D) erzeugten Nickmoment entgegenzuwirken, beziehungsweise den Ausschlagbefehl dq erhalten, der vom Organ zur willkürlichen Steuerung (11) kommt.

10. Flugzeug nach einem beliebigen der Ansprüche 1 bis 9,
    **dadurch gekennzeichnet, dass** sich die Flächen (5G, 5D) des Kopfleitwerks um eine Achse (C-C) drehen, die quer zur Längsachse (X-X) liegt.

11. Flugzeug nach einem beliebigen der Ansprüche 1 bis 10,
    **dadurch gekennzeichnet, dass** die Flächen (5G, 5D) des Kopfleitwerks mit Hinterkantenrudern versehen sind. ,

# FIG.1

# FIG.3

12

FIG.2

EP 0 953 504 B1

FIG.4